# EUROPEAN PATENT SPECIFICATION

(11) **EP 3 994 871 B1**
(45) Date of publication and mention of the grant of the patent: **31.05.2023**
(21) Application number: 19756363.8
(22) Date of filing: 21.08.2019
(51) Int. Cl.: H01Q 1/44, G06F 3/01, G06F 1/16, H04M 1/02, H01Q 1/24

(54) **DISPLAY STACK FOR ELECTRONIC DEVICE**
ANZEIGESTAPEL FÜR ELEKTRONISCHE VORRICHTUNG
EMPILEMENT D'AFFICHAGE POUR DISPOSITIF ÉLECTRONIQUE

(43) Date of publication of application: 11.05.2022
(73) Proprietor: Huawei Technologies Co., Ltd., Longgang District Shenzhen, Guangdong 518129 (CN)
(72) Inventor: MAATTANEN, Sami, 16440 Kista (SE); MÄKI, Jouni, Tapio, 16440 Kista (SE)
(74) Representative: Körber, Martin Hans
(86) International application number: PCT/EP2019/072353
(87) International publication number: WO 2021/032296

(56) References cited:
- CN-A- 109 411 873
- KR-A- 20150 132 994
- US-A1- 2018 034 130

## Description

### TECHNICAL FIELD

The disclosure relates to a display stack for an electronic device comprising a plurality of adjoining layers, the layers comprising at least a display panel, a cover layer, and a polarizer layer.

### BACKGROUND

The size of mobile electronic devices, such as tablets and mobile phones, is an important consideration when designing electronic devices. There is movement towards very large displays which cover as much as possible of the electronic device, making the space available for other components very limited.

Furthermore, future electronic devices need to support millimeter-wave bands, e.g. 24 GHz, 28 GHz and 42 GHz, as well as sub-6 GHz bands in order to accommodate increased data rates. However, the volume reserved for all the antennas in an electronic device is very limited, and increasing the volume reserved for antennas would make the electronic device larger, bulkier, and less attractive to users. Current millimeter-wave antennas either require additional volume, the size of the antenna array to be significantly reduced, and its performance impaired, or a large part of the display to be inactive.

Electronic devices may be provided with actuators in order to generate audio and haptic waves by vibrating, e.g., the display stack of the electronic device. This reduces the number of components, since there is no longer a need for separate speakers, microphones etc, increasing the space available for other components such as antennas.

However, prior art display stacks comprise a relatively large number of layers, some of which are relatively stiff in order to achieve sufficient audio quality and sufficient stability. The large number of layers adds to the volume of the display stack, and hence reduces the space available for other components.

CN 109 411 873 A discloses an electronic device comprising a display unit; an array antenna including a transparent electrode material and being disposed within the display unit; and a radio frequency integrated circuit (RFIC) electrically connected to the array antenna. The array antenna includes an antenna element having first and second sides perpendicular to each other disposed obliquely at a predetermined angle with respect to one side of the display unit; and a feeding part connecting the antenna element and the RFIC.

### SUMMARY

It is an object to provide an improved display stack. The foregoing and other objects are achieved by the features of the independent claims. Further implementation forms are apparent from the dependent claims, the description, and the figures. In the following, parts of the description and drawings referring to embodiments which are not covered by the claims are not presented as embodiments of the invention, but as examples useful for understanding the invention.

According to a first aspect, there is provided a display stack for an electronic device comprising a plurality of adj oining layers, the layers comprising at least a display panel, a cover layer, a polarizer layer arranged between the display panel and the cover layer, and
a support structure comprising a support plate, the support plate being arranged between the display panel and the polarizer layer, the support plate comprising at least one antenna element, an adhesive layer fixing the display panel to the support structure.

Such a solution facilitates a display stack for an electronic device which is thinner than prior art, due to the lack of need for separate components such as microphone, loudspeaker, or discrete sensors. Furthermore, the solution reduces the need for separate antenna elements since they are included into the display stack. This solution also allows for an easy and cost-effective replacement of the cover glass, which might e.g. be necessary if the cover glass has been damaged by impact.

In a possible implementation form of the first aspect, the antenna element is a millimeter-Wave antenna at least partially transparent to electromagnetic waves.

In a further possible implementation form of the first aspect, the antenna element does not reflect light waves in the direction of the display panel, such that the antenna element does not interfere with the function of the display panel.

In a further possible implementation form of the first aspect, the polarizer layer is fixed to one of the support plate and a main surface of the cover layer.

In a further possible implementation form of the first aspect, the support structure further comprises a rim extending at least partially around an edge of the support plate, the rim protruding at an angle to the main surface of the support plate, the cover layer being fixed to the rim by means of an adhesive. The rim protects the other, more delicate layers of the display stack, provides a surface for interconnecting the support structure and the cover layer, as well as increases the stability of the display stack.

In a further possible implementation form of the first aspect, the main surface of the support plate has a substantially identical surface area as a main surface of the display panel, such that the support structure provides as much support as possible to the display panel.

In a further possible implementation form of the first aspect, the cover layer comprises one of glass or polymer material.

In a further possible implementation form of the first aspect, the support structure comprises a transparent dielectric material, such that the support structure does not interfere with the function of the display panel.

In a further possible implementation form of the first aspect, the display panel comprises a plurality of adjoining sub-layers, the sub-layers comprising at least one of a display layer, a sensor layer, a touch sensor layer, and an adhesive layer.

In a further possible implementation form of the first aspect, the adhesive layer(s) comprise an optically clear adhesive, allowing good visibility through the adhesive layers(s).

According to a second aspect, there is provided an electronic device comprising a housing, a chassis, and a display stack according to the above, the chassis being enclosed by the display stack and the housing, the support structure of the display stack forming part of at least one of the chassis and the housing. This facilitates an electronic device which may be thinner than prior art due to a reduction in necessary components, and which is not weakened by openings which would be necessary for the function of such components.

In a possible implementation form of the second aspect, the housing comprises a side frame section and rear cover section, the side frame section comprising the rim of the support structure of the display stack, allowing an a stable and spatially efficient display stack as possible.

In a further possible implementation form of the second aspect, the chassis comprises the support plate of the support structure of said display stack.

This and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a cross-sectional side view of an electronic device in accordance with an embodiment of the present invention;
Fig. 2 shows a partial cross-sectional side view of a display stack in accordance with an embodiment of the present invention;
Fig. 3 shows a schematic side view of a display stack in accordance with an embodiment of the present invention;
Fig. 4 shows a cross-sectional perspective view of an electronic device in accordance with an embodiment of the present invention;
Fig. 5 shows a partial cross-sectional side view of the embodiment of Fig. 4.

### DETAILED DESCRIPTION

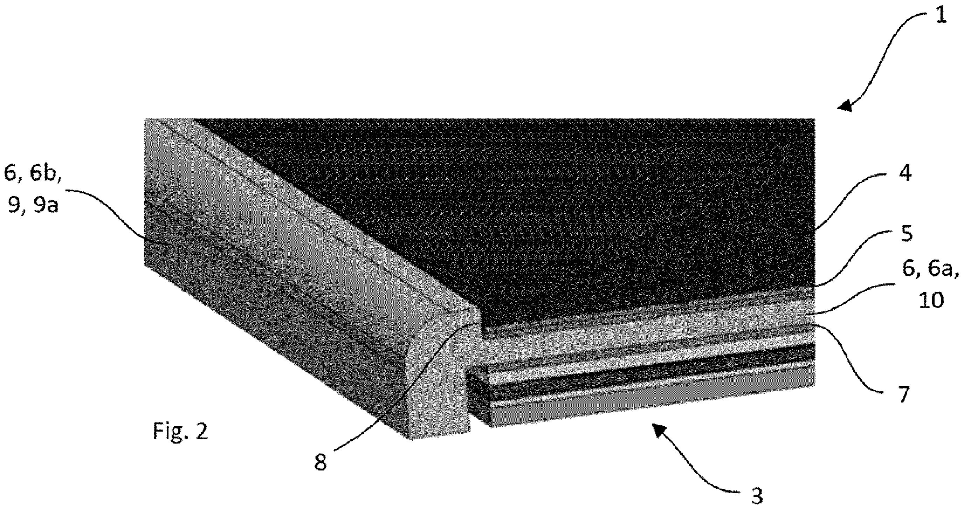

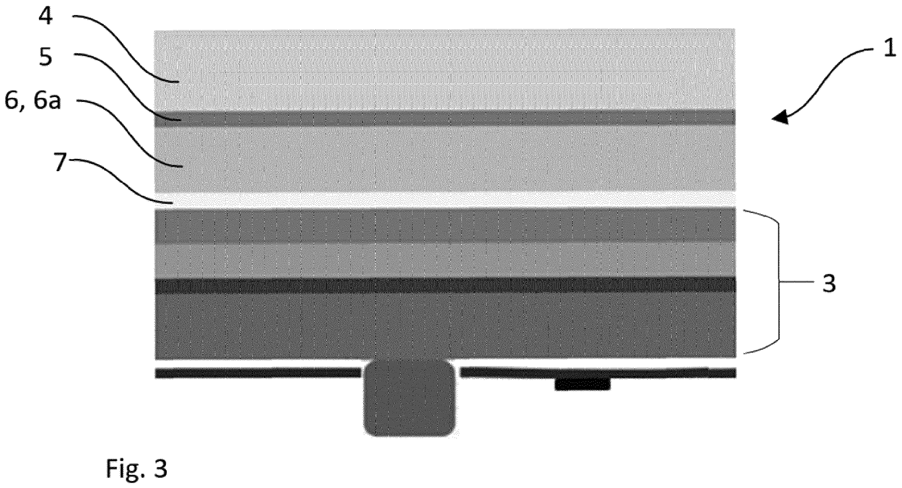

Figs. 2 and 3 show a display stack 1 comprising a plurality of adjoining layers. The layers comprise at least a display panel 3, a cover layer 4, a polarizer layer 5, and a support structure 6 comprising a support plate 6a.

The display panel 3 may comprise a plurality of adjoining sub-layers, the sub-layers comprising at least one of a display layer, a sensor layer, a touch sensor layer, and an adhesive layer. The display layer may, e.g., be an OLED or AMOLED display layer.

The polarizer layer 5 is arranged between the display panel 3 and the cover layer 4. The polarizer layer 5 may be fixed to one of the support plate 6a and a main surface of the cover layer 4.

The support plate 6a is arranged between the display panel 3 and the polarizer layer 5, and in one embodiment the support plate 6a abuts one surface of the display panel 3 as well as the polarizer layer 5.

An adhesive layer 7 fixes the display panel 3 to the support structure 6. In one embodiment, a main surface of the support plate 6a is fixed to a main surface of the display panel 3 by means of the adhesive layer 7. The support plate 6a and the display panel 3 are adjoined such that there is no gap between the support plate 6a and the display panel 3, i.e. the main surface of the support plate 6a is separated from the main surface of the display panel 3 by the adhesive layer 7 only.

The main surface of the support plate 6a may have a substantially identical surface area as the main surface of the display panel 3, however the two main surfaces may also be of different sizes. One or both of the main surfaces may also be divided into several sub-surfaces, one or several sub-surfaces being adhered to one or several of the opposite sub-surfaces.

The support structure 6 may also comprise a rim 6b, as shown in Fig. 2. The rim 6b extends at least partially around an edge of the support plate 6a, possibly around the entire edge of the support plate 6a. The rim 6b protrudes at an angle to the main surface of the support plate 6a, e.g. at 90°. The rim 6b may be a separate component attached to the support plate 6a or to the cover layer 4, or the rim 6b may be integral with the support plate 6a. A rim 6b is preferable should one or several of the layers of the display stack 1 be very soft, e.g. due to a thick adhesive layer 7, in which case the rim 6b helps stabilize the display stack 1 in order to make it durable and possible to generate vibrations.

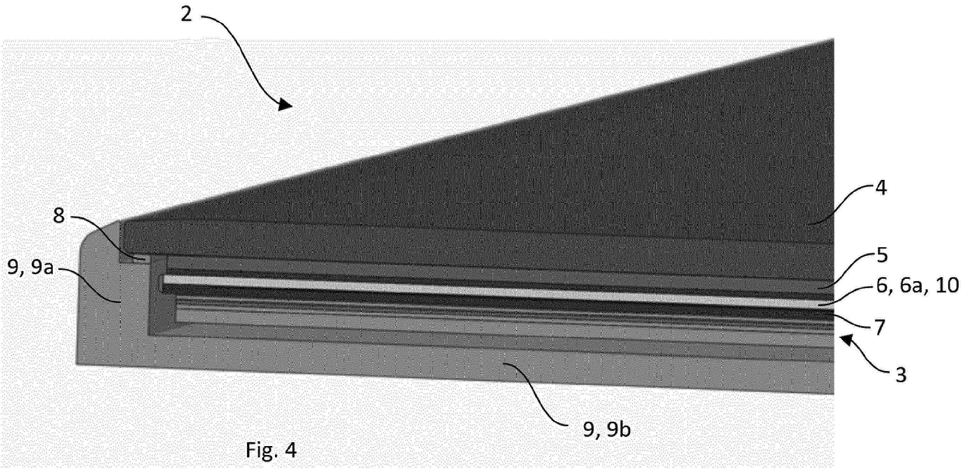

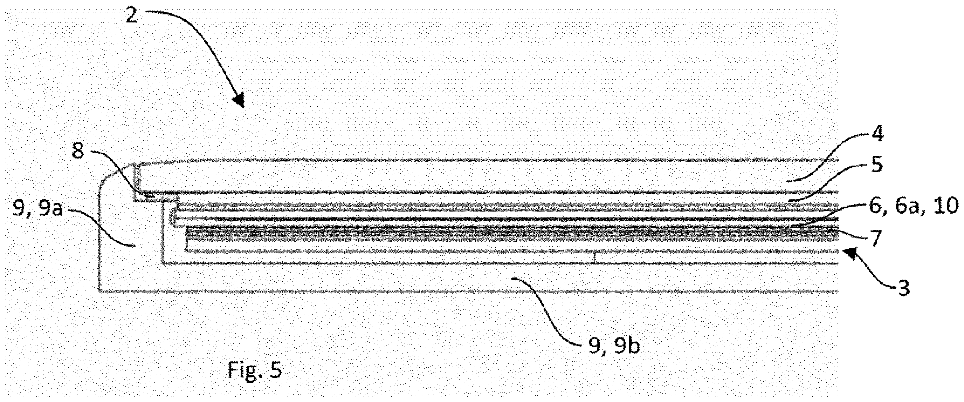

The cover layer 4 may comprise one of glass or polymer material. As shown in Fig. 2, the cover layer 4 may be fixed to the rim 6b by means of an adhesive 8, preferably a ductile adhesive, such that polarizer layer 5 is substantially enclosed by the cover layer 4 and the support structure 6. In the case the support structure 6 comprises only the support plate 6a, the cover layer 4 is adhered to the polarizer layer 5 and/or the chassis 10 or the housing 9 of the electronic device 2, as shown in Figs. 4 and 5.

The support plate 6a comprises at least one antenna element, which may be a millimeter-Wave antenna at least partially transparent to electromagnetic waves. In one embodiment, the antenna element does not reflect light waves in the direction of the display panel 3. The support structure 6 may comprise a transparent dielectric material.

The adhesive layers 7, 8 may comprise an optically clear adhesive.

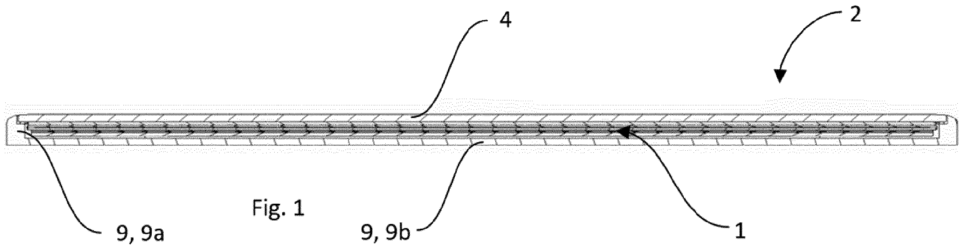

Figs. 1, 4, and 5 show illustrations of an electronic device 2 comprising a housing 9, a chassis 10, and a display stack 1. The chassis 10 is enclosed by the display stack 1 and the housing 9, and the support structure 6 of the display stack forms part of at least one of the chassis 10 and the housing 9.

One or several actuators (not shown) may be arranged between the display stack 1 and the chassis 10, and are adapted to move the display stack 1 relative to the chassis 10. The actuator(s) vibrate the display stack 1 such that audio and haptic waves are generated. This allows a solution which does comprise separate components such as microphone, loudspeaker, or discrete sensors for generating vibration. This, in turn, allows a very clean looking electronic device which is not weakened by openings which would be necessary for the function of such components.

The housing 9 may comprise a side frame section 9a and rear cover section 9b, the side frame section 9a comprising the rim 6b of the support structure 6 of the display stack 1, as shown in Fig. 2.

The chassis 10 may comprise the support plate 6a of the support structure 6 of the display stack 1, also shown in Fig. 2.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A display stack (1) for an electronic device (2) comprising a plurality of adjoining layers, said layers comprising at least
- a display panel (3),
- a cover layer (4),
- a polarizer layer (5) arranged between said display panel (3) and said cover layer (4), and
- a support structure (6) comprising a support plate (6a),
said support plate (6a) being arranged between said display panel (3) and said polarizer layer (5),
said support plate (6a) comprising at least one antenna element,
- an adhesive layer (7) fixing said display panel (3) to said support structure (6);
wherein a main surface of said support plate (6a) is fixed to a main surface of said display panel (3) by means of said adhesive layer (7) such that there is no gap between said support plate (6a) and said display panel (3).

2. The display stack (1) according to claim 1, wherein said antenna element is a millimeter-Wave antenna at least partially transparent to electromagnetic waves.

3. The display stack (1) according to claim 1, wherein said antenna element does not reflect light waves in the direction of said display panel (3).

4. The display stack (1) according to any one of claims 1-3, wherein said polarizer layer (5) is fixed to one of said support plate (6a) and a main surface of said cover layer (4).

5. The display stack (1) according to any one of claims 1-4, wherein said support structure (6) further comprises a rim (6b) extending at least partially around an edge of said support plate (6a),
said rim (6b) protruding at an angle to said main surface of said support plate (6a),
said cover layer (4) being fixed to said rim (6b) by means of an adhesive (8).

6. The display stack (1) according to any one of claims 1-5, wherein said main surface of said support plate (6a) has a substantially identical surface area as said main surface of said display panel (3).

7. The display stack (1) according to any one of claims 1-6, wherein said cover layer (4) comprises one of glass or polymer material.

8. The display stack (1) according to any one of claims 1-7, wherein said support structure (6) comprises a transparent dielectric material.

9. The display stack (1) according to any one of claims 1-8, wherein said display panel (3) comprises a plurality of adjoining sub-layers, said sub-layers comprising at least one of a display layer, a sensor layer, a touch sensor layer, and an adhesive layer.

10. The display stack (1) according to any one of claims 1-9, wherein said adhesive layer(s) (7, 8) comprise an optically clear adhesive.

11. An electronic device (2) comprising a housing (9), a chassis (10), and a display stack (1) according to any one of claims 1 to 10, said chassis (10) being enclosed by said display stack (1) and said housing (9),
the support structure (6) of said display stack forming part of at least one of said chassis (10) and said housing (9).

12. The electronic device (2) according to claim 11, wherein said housing (9) comprises a side frame section (9a) and rear cover section (9b), said side frame section (9a) comprising the rim (6b) of the support structure (6) of said display stack (1).

13. The electronic device (2) according to claim 11, wherein said chassis (10) comprises the support plate (6a) of the support structure (6) of said display stack (1).

## Patentansprüche

1. Anzeigestapel (1) für eine elektronische Vorrichtung (2), umfassend eine Mehrzahl von aneinander angrenzenden Schichten, wobei die Schichten mindestens Folgendes umfassen
- eine Anzeigetafel (3),
- eine Abdeckschicht (4),
- eine Polarisatorschicht (5), die zwischen der Anzeigetafel (3) und der Abdeckschicht (4) angeordnet ist, und
- eine Stützstruktur (6), die eine Stützplatte (6a) umfasst,
wobei die Stützplatte (6a) zwischen der Anzeigetafel (3) und der Polarisatorschicht (5) angeordnet ist,
wobei die Stützplatte (6a) mindestens ein Antennenelement umfasst,
- eine Klebstoffschicht (7), die die Anzeigetafel (3) an der Stützstruktur (6) fixiert;
wobei eine Hauptfläche der Stützplatte (6a) an einer Hauptfläche der Anzeigetafel (3) mittels der Klebstoffschicht (7) derart fixiert ist, dass kein Spalt zwischen der Stützplatte (6a) und der Anzeigetafel (3) vorhanden ist.

2. Anzeigestapel (1) nach Anspruch 1, wobei das Antennenelement eine Millimeterwellenantenne ist, die zumindest teilweise durchlässig für elektromagnetische Wellen ist.

3. Anzeigestapel (1) nach Anspruch 1, wobei das Antennenelement Lichtwellen nicht in die Richtung der Anzeigetafel (3) reflektiert.

4. Anzeigestapel (1) nach einem der Ansprüche 1-3, wobei die Polarisatorschicht (5) an einer der Stützplatte (6a) und einer Hauptfläche der Abdeckschicht (4) fixiert ist.

5. Anzeigestapel (1) nach einem der Ansprüche 1-4, wobei die Stützstruktur (6) ferner einen Rand (6b) umfasst, der sich zumindest teilweise um eine Kante der Stützplatte (6a) erstreckt,
wobei der Rand (6b) in einem Winkel zu der Hauptfläche der Stützplatte (6a) hervorragt,
wobei die Abdeckschicht (4) an dem Rand (6b) mittels eines Klebstoffs (8) fixiert ist.

6. Anzeigestapel (1) nach einem der Ansprüche 1-5, wobei die Hauptfläche der Stützplatte (6a) einen im Wesentlichen identischen Oberflächenbereich wie die Hauptfläche der Anzeigetafel (3) aufweist.

7. Anzeigestapel (1) nach einem der Ansprüche 1-6, wobei die Abdeckschicht (4) eines von Glas oder Polymermaterial umfasst.

8. Anzeigestapel (1) nach einem der Ansprüche 1-7, wobei die Stützstruktur (6) ein durchlässiges dielektrisches Material umfasst.

9. Anzeigestapel (1) nach einem der Ansprüche 1-8, wobei die Anzeigetafel (3) eine Mehrzahl von aneinander angrenzenden Teilschichten umfasst, wobei die Teilschichten mindestens eine einer Anzeigeschicht, einer Sensorschicht, einer Berührungssensorschicht und einer Klebstoffschicht umfassen.

10. Anzeigestapel (1) nach einem der Ansprüche 1-9, wobei die Klebstoffschicht(en) (7, 8) einen optisch klaren Klebstoff umfassen.

11. Elektronische Vorrichtung (2), umfassend ein Gehäuse (9), ein Chassis (10) und einen Anzeigestapel (1) nach einem der Ansprüche 1 bis 10, wobei das Chassis (10) von dem Anzeigestapel (1) und dem Gehäuse (9) eingeschlossen ist,
wobei die Stützstruktur (6) des Anzeigestapels einen Teil von mindestens einem des Chassis (10) und des Gehäuses (9) bildet.

12. Elektronische Vorrichtung (2) nach Anspruch 11, wobei das Gehäuse (9) einen Seitenrahmenabschnitt (9a) und einen Rückabdeckungsabschnitt (9b) umfasst, wobei der Seitenrahmenabschnitt (9a) den Rand (6b) der Stützstruktur (6) des Anzeigestapels (1) umfasst.

13. Elektronische Vorrichtung (2) nach Anspruch 11, wobei das Chassis (10) die Stützplatte (6a) der Stützstruktur (6) des Anzeigestapels (1) umfasst.

## Revendications

1. Empilement d'affichage (1) pour un dispositif électronique (2) comprenant une pluralité de couches contiguës, lesdites couches comprenant au moins
- un panneau d'affichage (3),
- une couche de couverture (4),
- une couche polarisante (5) agencée entre ledit panneau d'affichage (3) et ladite couche de couverture (4), et
- une structure de support (6) comprenant une plaque de support (6a),
ladite plaque de support (6a) étant agencée entre ledit panneau d'affichage (3) et ladite couche polarisante (5),
ladite plaque de support (6a) comprenant au moins un élément d'antenne,
- une couche adhésive (7) fixant ledit panneau d'affichage (3) à ladite structure de support (6) ;
une surface principale de ladite plaque de support (6a) étant fixée à une surface principale dudit panneau d'affichage (3) au moyen de ladite couche adhésive (7) de manière à ne laisser aucun espace entre ladite plaque de support (6a) et ledit panneau d'affichage (3).

2. Empilement d'affichage (1) selon la revendication 1, dans lequel ledit élément d'antenne est une antenne à ondes millimétriques au moins partiellement transparente aux ondes électromagnétiques.

3. Empilement d'affichage (1) selon la revendication 1, dans lequel ledit élément d'antenne ne réfléchit pas les ondes lumineuses dans la direction dudit panneau d'affichage (3).

4. Empilement d'affichage (1) selon l'une quelconque des revendications 1 à 3, dans lequel ladite couche polarisante (5) est fixée soit à ladite plaque de support (6a), soit à une surface principale de ladite couche de couverture (4).

5. Empilement d'affichage (1) selon l'une quelconque des revendications 1 à 4, dans lequel ladite structure de support (6) comprend en outre un rebord (6b) s'étendant au moins partiellement autour d'un bord de ladite plaque de support (6a),
ledit rebord (6b) faisant saillie en formant un angle avec ladite surface principale de ladite plaque de support (6a),
ladite couche de couverture (4) étant fixée audit rebord (6b) au moyen d'un adhésif (8).

6. Empilement d'affichage (1) selon l'une quelconque des revendications 1 à 5, dans lequel ladite surface principale de ladite plaque de support (6a) est pourvue d'une superficie sensiblement identique à celle de ladite surface principale dudit panneau d'affichage (3).

7. Empilement d'affichage (1) selon l'une quelconque des revendications 1 à 6, dans lequel ladite couche de couverture (4) comprend soit du verre, soit un matériau polymère.

8. Empilement d'affichage (1) selon l'une quelconque des revendications 1 à 7, dans lequel ladite structure de support (6) comprend un matériau diélectrique transparent.

9. Empilement d'affichage (1) selon l'une quelconque des revendications 1 à 8, dans lequel ledit panneau d'affichage (3) comprend une pluralité de sous-couches contiguës, lesdites sous-couches comprenant au moins une couche parmi une couche d'affichage, une couche de capteurs, une couche de capteurs tactiles et une couche adhésive.

10. Empilement d'affichage (1) selon l'une quelconque des revendications 1 à 9, dans lequel ladite ou lesdites couche(s) adhésive(s) (7, 8) comprend/comprennent un adhésif optiquement transparent.

11. Dispositif électronique (2) comprenant un boîtier (9), un châssis (10) et un empilement d'affichage (1) selon l'une quelconque des revendications 1 à 10, ledit châssis (10) étant enfermé par ledit empilement d'affichage (1) et ledit boîtier (9),
la structure de support (6) dudit empilement d'affichage faisant partie dudit châssis (10) et/ou dudit boîtier (9).

12. Dispositif électronique (2) selon la revendication 11, dans lequel ledit boîtier (9) comprend une partie formant cadre latéral (9a) et une partie formant couvercle arrière (9b), ladite partie formant cadre latéral (9a) comprenant le rebord (6b) de la structure de support (6) dudit empilement d'affichage (1).

13. Dispositif électronique (2) selon la revendication 11, dans lequel ledit châssis (10) comprend la plaque de support (6a) de la structure de support (6) dudit empilement d'affichage (1).
